# FASCICULE DE BREVET EUROPEEN

(11) **EP 4 021 781 B1**
(45) Date de publication et mention de la délivrance du brevet: **27.09.2023**
(21) Numéro de dépôt: 20758279.2
(22) Date de dépôt: 10.08.2020
(51) Int. Cl.: B62D 21/11, B62D 21/15, B62D 25/08, B62D 25/20

(54) **VEHICULE HYBRIDE OU ELECTRIQUE AVEC DISPOSITIF DE RENFORCEMENT DE SA STRUCTURE DE BAS DE CAISSE**
HYBRID- ODER ELEKTROFAHRZEUG MIT VORRICHTUNG ZUR VERSTÄRKUNG SEINER SCHWELLERSTRUKTUR
HYBRID OR ELECTRIC VEHICLE WITH DEVICE FOR REINFORCING ITS ROCKER PANEL STRUCTURE

(30) Priorité: 27.08.2019 FR 1909419
(43) Date de publication de la demande: 06.07.2022
(73) Titulaire: PSA Automobiles SA, 78300 Poissy (FR)
(72) Inventeur: PERU, Marc, 92290 CHATENAY MALABRY (FR); VALTIER, Alain, 78770 AUTOUILLET (FR); LE BLAY, Marie Dominique, 78830 BONNELLES (FR); KOZAK, Alban, 28410 BOUTIGNY PROUAIS (FR); LAMOURIC, Stephane, 78280 GUYANCOURT (FR)
(86) Numéro de dépôt international: PCT/FR2020/051454
(87) Numéro de publication internationale: WO 2021/038157

(56) Documents cités:
- KR-A- 20180 070 088
- US-A1- 2018 339 668

## Description

La présente invention revendique la priorité de la demande française 1909419 déposée le 27 Aout 2019.

L'invention a trait au domaine des véhicules automobiles, plus particulièrement à leurs structures en vue de l'absorption de l'énergie d'impact en cas de choc.

Parmi les éléments de structure du soubassement d'un véhicule, les brancards sous-plancher sont conçus pour transmettre les efforts en cas de choc frontal. La section de ce corps creux est celle qui montre une proximité au sol la plus importante. Cela ne pose aucun problème dans les véhicules à motorisation thermique, mais limite les possibilités d'implantation de batteries sous-plancher dans le cadre de véhicules de type hybride ou électrique. Les batteries doivent par exemple enjamber les brancards intérieurs sous-plancher, ce qui limite le nombre ou la taille des modules de batteries pouvant être implantés.

Une solution pour augmenter la taille des batteries sous-plancher d'un véhicule est non pas d'enjamber les brancards intérieurs sous-plancher mais de les couper. Le relais pour le passage d'effort est alors pris par la coque de la batterie ou par des cadres de protection conçus et agencés à cet effet. Néanmoins, le fait de couper les brancards sous-plancher présente le risque de dégrader la tenue du soubassement lors des chocs frontaux, comme par exemple en cas de choc frontal à 40% de recouvrement ou en cas de choc frontal de type « small overlap » dans lesquels seul 25 % de l'avant du véhicule est recouvert par l'obstacle. Une solution reste donc à trouver pour pouvoir garantir la tenue du soubassement lors de tels types de chocs frontaux.

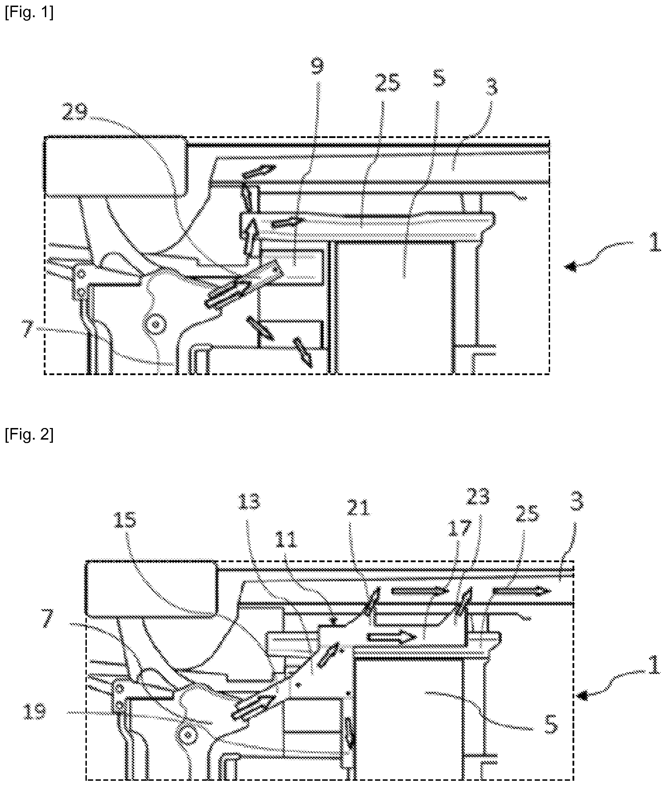

Plusieurs solutions ont été proposées pour permettre d'améliorer la diffusion de l'énergie en cas de choc frontal, comme par exemple illustré sur la figure 1 par l'installation d'une bride de renfort 29 entre l'extrémité arrière du berceau 7 du support du moteur et le brancard intérieur avant 9 ainsi que l'installation de brancards extérieurs 25 jouxtant le bac 5 des batteries. Ainsi, lors d'un choc frontal, l'énergie peut diffuser du berceau 7 vers le brancard intérieur avant 9 ainsi que sur le brancard extérieur 25 et enfin sur un longeron 3 délimitant la structure de bas de caisse. Le schéma de la figure 1 montre, au moyen de flèches, la diffusion de l'énergie en cas de choc frontal sur un véhicule automobile 1 électrique ou hybride connu. Cependant, lors du choc frontal, les efforts vont être dissipés vers l'arrière et les côtés latéraux du véhicule en se propageant par exemple dans les brancards extérieurs 25, ou leurs renforts, et puis seulement aux longerons 3 délimitant le soubassement ou la structure de bas de caisse. La dissipation du choc est donc ralentie, ce qui peut engendrer des déformations au niveau du brancard extérieur 25 et/ou sur la structure de bas de caisse. Un cloquage de la structure de bas de caisse est ainsi généralement visible après le choc.

De plus, en cas de choc violent, il y a un risque important que le brancard intérieur avant recule jusqu'à entrer en contact avec les coques de protection des batteries ou « bac de batteries », ce qui n'est pas souhaitable au vu des risques liés à un endommagement des batteries de propulsion suite à un perçage dudit bac de batterie.

Des moyens de renforcement de la structure de bas de caisse de véhicule automobile sont connus dans l'art.

Ainsi, le document CA 2 962 348 décrit une structure de bas de caisse de véhicule où les éléments de renfort classiques, tels que les poutres transversales avant et arrière, sont conçus en acier trempé présentant une résistance à la traction élevée.

Le document FR 3 033 297 décrit une structure de véhicule comportant un premier et un second élément de renfort aptes à contrecarrer un choc frontal sur une structure dissymétrique selon l'axe vertical. Les éléments de renforts coopèrent entre eux grâce à des moyens de liaison élastiques qui permettent de stabiliser la structure en cas de choc.

Le document FR 2 928 127 décrit un dispositif de renforcement de liaison entre la partie arrière du berceau moteur et le soubassement d'un véhicule automobile de manière à garantir la cohésion entre le berceau et le soubassement. Le berceau comprend une pièce mâle sur sa partie destinée à être recouverte par le brancard. La pièce mâle est reçue dans une pièce femelle aménagée sur le brancard quand celui-ci est en position montée sur le berceau.

Le document US2018339668 décrit un véhicule hybride ou électrique comprenant un plancher, des longerons, des brancards, un bac de batterie agencé sous le plancher et un dispositif de renfort fixé à l'un des brancards.

Le document FR 2 859 448 décrit un véhicule automobile avec un soubassement comprenant un plancher avec deux renforts inférieurs de longeron et deux brancards intérieurs. Le soubassement comporte aussi de chaque côté du plan médian du véhicule un tirant central reliant un point du brancard intérieur à un point arrière du renfort inférieur de longeron. La présence du tirant central permet d'améliorer le comportement routier du véhicule en entrée de virage ainsi que la précision de trajectoire en virage.

Les solutions proposées par ces documents sont intéressantes mais pas entièrement satisfaisantes. Il existe donc un besoin pour un véhicule hybride ou électrique dont la structure du soubassement est adaptée à la fois à l'implantation de batteries de taille importante et au maintien de bonnes prestations en cas de choc frontal.

La présente invention a donc pour objectif d'apporter une solution à au moins un des inconvénients rencontrés dans l'art antérieur en proposant une structure de bas de caisse d'un véhicule électrique ou hybride qui soit apte à transmettre les efforts en provenance un choc frontal d'une manière directe vers les côtés latéraux du véhicule, en évitant autant que possible les déformations au niveau de la structure de bas de caisse du véhicule.

A cet effet et selon un premier aspect, l'invention a pour objet un véhicule hybride ou électrique comprenant un plancher, des longerons de bas de caisse s'étendant le long des deux bords latéraux du plancher, au moins un bac de batterie de propulsion agencé sous le plancher, un berceau de support du moteur du véhicule comprenant deux extrémités arrière, et des brancards intérieurs avant sous-plancher comprenant une extrémité agencée en regard d'un bac de batterie de propulsion, le véhicule est remarquable en ce qu'il comprend en outre au moins un dispositif de renfort ; le dispositif de renfort comprenant au moins un corps fixé à un brancard intérieur avant sous-plancher et au moins deux pattes de renfort s'étendant depuis ledit corps; et en ce qu'une première patte de renfort relie ledit corps à une extrémité arrière dudit berceau et une deuxième patte de renfort relie ledit corps à un longeron de bas de caisse.

Comme on l'aura compris à la lecture de la définition qui vient d'en être donnée, l'invention consiste à créer une voie directe de transmission des efforts entre le berceau et les longerons latéraux du véhicule. Cette voie d'effort peut se substituer ou venir en complément d'une bride reliant le berceau et le brancard intérieur sous plancher. De préférence, elle se substitue à la bride ce qui permet en outre de diminuer la garde au sol du véhicule. Le gain par rapport à la garde au sol est d'environ 5 mm.

Selon un mode de réalisation préféré, le dispositif de renfort comprend en outre une troisième patte de renfort s'étendant depuis ledit corps selon la direction transversale du véhicule et fixée à, ou placée en appui contre, au moins un bac de batterie de propulsion.

Selon une mise en oeuvre de l'invention, le véhicule comprend un dispositif de renfort unique, ledit dispositif de renfort comprenant deux corps, chacun des corps étant fixé à un brancard intérieur et une troisième patte de renfort unique reliant les deux corps entre eux. De manière alternative, le véhicule comprend deux dispositifs de renfort ; de préférence, lesdits deux dispositifs de renfort sont reliés entre eux par leur troisième patte de renfort.

L'invention concerne ainsi un véhicule comprenant deux dispositifs de renfort, chacun des dispositifs de renfort comprenant deux pattes de renfort ; ou un véhicule comprenant deux dispositifs de renfort dont un dispositif de renfort avec deux pattes de renfort et un dispositif de renfort avec trois pattes de renfort ; ou encore un véhicule comprenant deux dispositifs de renfort, chacun des dispositifs de renfort comprenant trois pattes de renfort.

Avantageusement, le véhicule comprenant en outre deux brancards extérieur sous-plancher, chaque brancard extérieur s'étendant au moins en partie entre le ou un des bacs de batterie de propulsion et un des longerons de bas de caisse selon la direction longitudinale du véhicule, le véhicule est remarquable en ce que la ou au moins une deuxième patte de renfort comprend deux bords latéraux s'étendant selon la direction longitudinale du véhicule et en ce qu'elle recouvre un des brancards extérieurs ; de préférence, la ou au moins une deuxième patte de renfort est fixée au longeron par un de ses bords latéraux ou par une interface de fixation s'étendant depuis un de ses bords latéraux.

Préférentiellement, chaque deuxième patte de renfort comprenant une extrémité avant et une extrémité arrière, l'extrémité avant étant fixée au corps du dispositif de renfort ; le véhicule est remarquable en ce que l'extrémité arrière de la ou d'au moins une deuxième patte de renfort est fixée audit brancard extérieur.

Selon un mode de réalisation de l'invention, le dispositif de renfort est formé d'une seule pièce.

De manière avantageuse, au moins une patte du dispositif de renfort est un profilé montrant une section en L ou en U ; et/ou, est formée par au moins une tôle montrant une épaisseur entre 2,0 mm et 2,5 mm ; de préférence, la ou les tôles sont en acier.

Selon un deuxième aspect, l'invention a pour objet un dispositif de renfort destiné au renforcement de la structure de bas de caisse d'un véhicule électrique ou hybride selon le premier aspect ; le dispositif de renfort étant remarquable en ce qu'il comprend au moins un corps destiné à être fixé à un brancard intérieur avant sous-plancher, et au moins deux pattes de renfort s'étendant depuis ledit corps selon des directions différentes ; une première patte de renfort étant destinée à se fixer à une extrémité arrière du berceau du véhicule et une deuxième patte étant destinée à se fixer à un longeron de bas de caisse du véhicule ; de préférence, le dispositif de renfort comprend au moins une troisième patte de renfort s'étendant selon une direction perpendiculaire à celle de la deuxième patte de renfort.

Selon un mode de réalisation préféré de l'invention, le dispositif de renfort est destiné à être fixé au véhicule par vissage ou rivetage et comprend à cet effet une pluralité de trous pour le passage de moyen de fixation ; de préférence, la ou au moins une deuxième patte de renfort comprend deux bords latéraux destinés à s'étendre selon la direction longitudinale du véhicule et un desdits bords latéraux montre au moins un trou pour le passage d'un moyen de fixation ; de préférence encore, au moins un trou est disposé au niveau d'une extension formant une interface de fixation et s'étendant depuis ledit bord latéral.

L'invention sera bien comprise et d'autres aspects et avantages apparaîtront clairement à la lecture de la description qui suit donnée en référence aux figures sur lesquelles :
[Fig.1] la figure 1 illustre la situation antérieure dans laquelle les efforts étaient transmis par le biais d'une bride.
[Fig. 2] la figure 2 illustre l'implantation d'un dispositif de renfort selon l'invention.
[Fig. 3] la figure 3 est une représentation d'un mode de réalisation d'un dispositif de renfort selon l'invention dans sa version tripode.

Dans la description qui suit, le terme « comprendre » est synonyme de « inclure » et n'est pas limitatif en ce qu'il autorise la présence d'autres éléments ou moyens dans le dispositif de renfort ou le véhicule auquel il se rapporte. Il est entendu que le terme « comprendre » inclut les termes « consister en ». De même, les termes « inférieur », « supérieur », « avant », « arrière », « longitudinal » et « transversal » s'entendront par rapport à l'orientation générale du véhicule tel que pris selon son sens normal de marche. Sur les différentes figures, les mêmes références désignent des éléments identiques ou similaires.

La figure 1 ayant été décrite en partie introductive, on se référera à présent à la figure 2 illustrant l'implantation d'un dispositif de renfort 11 dans un véhicule 1 de type hybride ou électrique. D'une manière générale, le véhicule 1 comprend un plancher, des longerons 3 de bas de caisse s'étendant le long des deux bords latéraux du plancher, au moins un bac 5 de batterie de propulsion agencé sous le plancher, un berceau 7 de support du moteur du véhicule comprenant deux extrémités arrière, et des brancards intérieurs 9 avant sous-plancher comprenant une extrémité agencée en regard d'un bac 5 de batterie de propulsion. Selon l'invention, le véhicule 1 est remarquable en ce qu'il comprend en outre au moins un dispositif de renfort 11.

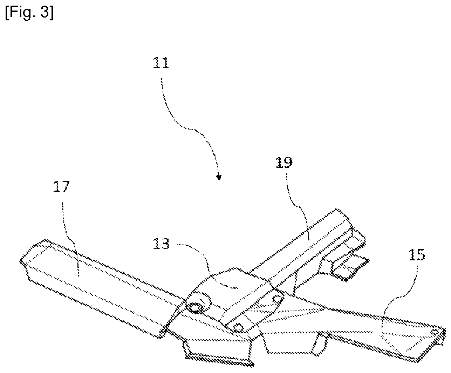

Selon un mode de réalisation préféré de l'invention illustré en figure 3, le dispositif de renfort 11 comprend au moins un corps 13 et au moins deux pattes de renfort (15, 17) s'étendant depuis ledit corps 13 ou depuis chacun des corps 13 ; de préférence, le dispositif de renfort 11 comprend au moins un corps 13 et au moins trois pattes de renfort (15, 17, 19) s'étendant depuis ledit corps 13 ou depuis au moins un desdits corps 13. Le corps 13, ou chacun des corps 13 lorsqu'il en comprend plus d'un, est destiné à être fixé à un brancard intérieur 9 avant sous-plancher. De ce corps 13 s'étendent au moins deux pattes de renfort (15, 17). Une première patte de renfort 15 relie ledit corps 13 à une extrémité arrière du berceau de véhicule, afin de permettre une transmission des efforts entre ledit berceau 7 et ledit brancard intérieur 9 avant. Une deuxième patte de renfort 17 relie ledit corps 13 à un longeron 3 de bas de caisse. Il est ainsi créé une voie directe de transmission des efforts entre le berceau 7 et le ou les longerons 3 de bas de caisse.

Selon un mode de réalisation préféré de l'invention, la deuxième patte de renfort 17 s'étend selon la direction longitudinale du véhicule et se place parallèlement au longeron 3 de bas de caisse. La deuxième patte de renfort 17 peut présenter au moins une extension (21 ; 23) qui s'étend depuis le bord latéral de ladite patte de renfort 17 en direction du longeron 3 de bas de caisse. Chaque extension (21 ; 23) forme alors une interface de fixation qui permet de fixer la deuxième patte de renfort 17 au longeron 3 de bas de caisse. La deuxième patte de renfort 17 va donc présenter au moins un trou pour le passage d'une vis ou d'un rivet sur son bord latéral ou sur une ou plusieurs extensions s'étendant depuis l'un de ses bords latéraux.

Afin d'améliorer la transmission des efforts entre le berceau 7 et le longeron 3 de bas de caisse, au moins deux extensions (21 ; 23) s'étendent depuis le bord latéral de la deuxième patte de renfort 17.

Avantageusement, le véhicule peut comprendre deux brancards extérieur 25 sous-plancher qui s'étendent au moins en partie entre le ou un des bacs 5 de batterie de propulsion. Dans ce cas, la deuxième patte de renfort 17 est avantageusement agencée pour recouvrir un des brancards extérieurs 25 et être fixée au longeron 3 par son bord latéral ou par au moins une extension s'étendant depuis ledit bord latéral et formant une interface de fixation.

Selon un mode de réalisation préféré de l'invention, lorsque les brancards extérieur 25 sont présents, la deuxième patte de renfort 17 est en outre fixée au brancard extérieur 25 qu'elle recouvre, permettant d'optimiser ainsi la transmission des efforts reçus depuis le berceau 7. Idéalement, la deuxième patte de renfort 17 est fixée audit brancard extérieur 25 par son extrémité arrière qui présente à cet effet une interface de fixation. Par exemple, ladite interface de fixation comprend au moins un trou pour le passage d'une vis de fixation ou d'un rivet.

Selon un mode de réalisation préféré de l'invention, le dispositif de renfort 11 comprend en outre une troisième patte de renfort 19. Cette patte de renfort 19 est reliée au corps 13 du dispositif et s'étend, quant à elle, selon la direction transversale du véhicule. Elle est agencée pour se placer en appui contre le ou un des bacs 5 de batterie ou pour être fixée audit bac 5 de batterie. Ainsi, les efforts en provenance du berceau 7 qui sont transmis au bac 5 de batterie ne sont plus concentrés au niveau de l'extrémité du brancard intérieur 9 avant en regard de ladite face avant du bac 5 de batterie, mais sont répartis sur une surface plus importante de la face avant dudit bac 5 de batterie. Cette configuration est avantageuse en ce qu'elle limite les risques de percement du bac 5 de batterie en cas de choc frontal violent.

Avantageusement, le véhicule comprend deux dispositifs de renfort 11, chacun étant agencé au niveau d'un des côtés dudit véhicule. La troisième patte de renfort 19 est donc configurée pour s'étendre selon la direction transversale jusqu'à, par exemple, l'axe médian du véhicule. Selon un mode de réalisation préféré de l'invention, le véhicule comprend deux dispositifs de renfort reliés entre eux par leur troisième patte de renfort.

Selon un mode de réalisation non représenté, le véhicule comprend un dispositif de renfort unique présentant deux corps, chacun étant fixé sur un des brancards intérieurs avant ; deux premières pattes, chacune reliant une extrémité arrière du berceau à un des corps ; deux deuxièmes pattes, chacune reliant un des corps à un des longerons ; et une troisième patte unique reliant les deux corps. De préférence, la troisième patte se place en appui contre la face avant du bac de batterie ou est fixée à ladite face avant dudit bac de batterie.

Selon un mode de réalisation de l'invention, le dispositif de renfort 11 est constitué d'une seule pièce. Il sera obtenu par exemple par moulage. De manière alternative, le dispositif de renfort 11 est constitué d'un assemblage de pièces, les différentes pièces étant des tôles embouties et/ou pliées. Cette configuration permet d'assembler le dispositif de renfort directement sur le véhicule et donc de s'adapter à sa silhouette et/ou à ses dimensions. Ainsi selon un mode de réalisation préféré, au moins une patte est reliée au corps par vissage ; de préférence, les vis de fixation vont à la fois relier la patte au corps et le corps au brancard intérieur avant.

De manière avantageuse, au moins une patte du dispositif de renfort est un profilé montrant une section en L ou en U ; et/ou, au moins une patte du dispositif de renfort est formée par au moins une tôle montrant une épaisseur entre 2,0 mm et 2,5 mm ; de préférence, la ou les tôles sont en acier.

Lorsque la troisième patte est fixée au bac de batterie, cette dernière pourra montrer une épaisseur plus fine ; de préférence, comprise entre 1 et 2 mm.

## Revendications

1. Véhicule (1) hybride ou électrique comprenant un plancher, des longerons (3) de bas de caisse s'étendant le long des deux bords latéraux du plancher, au moins un bac (5) de batterie de propulsion agencé sous le plancher, un berceau (7) de support du moteur du véhicule comprenant deux extrémités arrière, et des brancards intérieurs (9) avant sous-plancher comprenant une extrémité agencée en regard d'un bac (5) de batterie de propulsion, le véhicule (1) est **caractérisé en ce qu'**il comprend en outre au moins un dispositif de renfort (11) ; le dispositif de renfort comprenant au moins un corps (13) fixé à un brancard intérieur (9) avant sous-plancher et au moins deux pattes de renfort (15, 17) s'étendant depuis ledit corps (13) ; et **en ce qu'**une première patte (15) de renfort relie ledit corps (13) à une extrémité arrière dudit berceau (7) et une deuxième patte (17) de renfort relie ledit corps (13) à un longeron (3) de bas de caisse.

2. Véhicule (1) selon la revendication 1, **caractérisé en ce que** le dispositif de renfort (11) comprend en outre une troisième patte (19) de renfort s'étendant depuis ledit corps (13) selon la direction transversale du véhicule et fixée à ou placée en appui contre au moins un bac (5) de batterie de propulsion.

3. Véhicule (1) selon la revendication 2, **caractérisé en ce qu'**il comprend un dispositif de renfort (11) unique, ledit dispositif de renfort (11) comprenant deux corps (13), chacun des corps (13) étant fixé à un brancard intérieur et une troisième patte de renfort (19) unique reliant les deux corps (13) entre eux.

4. Véhicule selon la revendication 2, **caractérisé en ce qu'**il comprend deux dispositifs de renfort (11) ; de préférence, lesdits deux dispositifs de renfort (11) sont reliés entre eux par leur troisième patte de renfort (19).

5. Véhicule (1) selon l'une des revendications 1 à 4, le véhicule comprenant en outre deux brancards extérieur (25) sous-plancher, chaque brancard extérieur (25) s'étendant au moins en partie entre le ou un des bacs (5) de batterie de propulsion et un des longerons (3) de bas de caisse selon la direction longitudinale du véhicule, le véhicule étant **caractérisé en ce que** la ou au moins une deuxième patte de renfort (17) comprend deux bords latéraux s'étendant selon la direction longitudinale du véhicule et **en ce qu'**elle recouvre un des brancards extérieurs (25) ; de préférence, la ou au moins une deuxième patte de renfort (17) est fixée au longeron par un de ses bords latéraux ou par une interface de fixation s'étendant depuis un de ses bords latéraux.

6. Véhicule (1) selon la revendication 5, chaque deuxième patte de renfort comprenant une extrémité avant et une extrémité arrière, l'extrémité avant étant fixée au corps (13) du dispositif de renfort (11) ; le véhicule (1) est **caractérisé en ce que** l'extrémité arrière de la ou d'au moins une deuxième patte de renfort est fixée audit brancard extérieur (25).

7. Véhicule (1) selon l'une des revendications 1 à 6, **caractérisé en ce que** le dispositif de renfort (11) est formé d'une seule pièce.

8. Véhicule selon l'une des revendications 1 à 7, **caractérisé en ce qu'**au moins une patte du dispositif de renfort est un profilé montrant une section en L ou en U ; et/ou, est formée par au moins une tôle montrant une épaisseur entre 2,0 mm et 2,5 mm ; de préférence, la ou les tôles sont en acier.

9. Dispositif de renfort (11) destiné au renforcement de la structure de bas de caisse d'un véhicule (1) électrique ou hybride selon l'une des revendications 1 à 8 ; le dispositif de renfort (11) étant **caractérisé en ce qu'**il comprend au moins un corps (13) destiné à être fixé à un brancard intérieur (9) avant sous-plancher, et au moins deux pattes de renfort (15, 17) s'étendant depuis ledit corps (13) selon des directions différentes ; une première patte de renfort étant destinée à se fixer à une extrémité arrière du berceau du véhicule et une deuxième patte étant destinée à se fixer à un longeron de bas de caisse du véhicule ; de préférence, le dispositif de renfort comprend au moins une troisième patte de renfort s'étendant selon une direction perpendiculaire à celle de la deuxième patte de renfort.

10. Dispositif de renfort (11) selon la revendication 9, **caractérisé en ce que** le dispositif de renfort est destiné à être fixé au véhicule par vissage ou rivetage et comprend à cet effet une pluralité de trous pour le passage de moyen de fixation ; de préférence, la ou au moins une deuxième patte de renfort (17) comprend deux bords latéraux destinés à s'étendre selon la direction longitudinale du véhicule et un desdits bords latéraux montre au moins un trou pour le passage d'un moyen de fixation.

## Patentansprüche

1. Hybrid- oder elektrisches Fahrzeug (1) mit einem Boden, Unterflurholmen (3), die sich entlang der beiden Seitenkanten des Bodens erstrecken, mindestens einem unter dem Boden angeordneten Antriebsbatteriekasten (5), einem Motorstützschlitten (7) mit zwei hinteren Enden und vorderen inneren Unterbodenabzweigungen (9) mit einem Behälter (5) gegenüberliegenden Ende Antriebsbatterie, **dadurch gekennzeichnet, dass** das Fahrzeug (1) zusätzlich mindestens eine Verstärkungseinrichtung (11) aufweist; Die Verstärkungsvorrichtung umfasst mindestens einen Körper (13), der an einer inneren Tragplatte (9) vor dem Unterboden befestigt ist, und mindestens zwei Verstärkungslaschen (15, 17), die sich von diesem Körper (13) erstrecken, und dass eine erste Verstärkungslasche (15) den Körper (13) mit einem hinteren Ende des Gestells (7) verbindet und eine zweite Verstärkungslasche (17) den Körper (13) mit einem Unterschenkelholm (3) verbindet.

2. Fahrzeug (1) nach Anspruch 1, **dadurch gekennzeichnet, dass** die Verstärkungseinrichtung (11) ferner eine dritte Verstärkungslasche (19) umfasst, die sich von dem Körper (13) in Querrichtung des Fahrzeugs erstreckt und an mindestens einer Antriebsbatterie-Wanne (5) befestigt oder an ihr angebracht ist.

3. Fahrzeug (1) nach Anspruch 2, **dadurch gekennzeichnet, dass** es eine einzige Verstärkungseinrichtung (11) umfasst, wobei die Verstärkungseinrichtung (11) zwei Körper (13) umfasst, wobei jeder der Körper (13) an einer inneren Trägerplatte und einer einzigen dritten Verstärkungslasche (19) befestigt ist, die die beiden Körper (13) miteinander verbinden.

4. Fahrzeug nach Anspruch 2, **dadurch gekennzeichnet, dass** es zwei Verstärkungseinrichtungen (11) umfasst; Vorzugsweise sind die beiden Verstärkungseinrichtungen (11) über ihre dritte Verstärkungslasche (19) miteinander verbunden.

5. Fahrzeug (1) nach einem der Ansprüche 1 bis 4, wobei das Fahrzeug ferner zwei äußere Unterbodenanschlüsse (25) aufweist, wobei sich jede äußere Trägeranschlussbuchse (25) zumindest teilweise zwischen dem oder einem der Antriebsbatteriebehälter (5) und einem der unteren Trägerlängsträger (3) in Fahrzeuglängsrichtung erstreckt, wobei das Fahrzeug **dadurch gekennzeichnet ist, dass** das oder zumindest Eine zweite Verstärkungslasche (17) umfasst zwei sich in Fahrzeuglängsrichtung erstreckende Seitenränder, die einen der Außenschenkel (25) überdecken. Vorzugsweise ist die mindestens eine zweite Verstärkungslasche (17) mit einer ihrer Seitenkanten oder einer sich von einer ihrer Seitenkanten erstreckenden Befestigungsschnittstelle am Längsträger befestigt.

6. Fahrzeug (1) nach Anspruch 5, wobei jede zweite Verstärkungslasche ein vorderes und ein hinteres Ende umfasst, wobei das vordere Ende an dem Körper (13) der Verstärkungsvorrichtung (11) befestigt ist; Das Fahrzeug (1) zeichnet sich dadurch aus, dass das hintere Ende der mindestens einen zweiten Verstärkungslasche an der äußeren Tragplatte (25) befestigt ist.

7. Fahrzeug (1) nach einem der Ansprüche 1 bis 6, **dadurch gekennzeichnet, dass** die Verstärkungseinrichtung (11) einstückig ausgebildet ist.

8. Fahrzeug nach einem der Ansprüche 1 bis 7, **dadurch gekennzeichnet, dass** mindestens eine Lasche der Verstärkungseinrichtung ein Profil ist, das einen L- oder U-förmigen Querschnitt aufweist; und/oder aus mindestens einem Blech mit einer Dicke zwischen 2,0 mm und 2,5 mm besteht; Vorzugsweise besteht die Bleche aus Stahl.

9. Verstärkungsvorrichtung (11) zur Verstärkung der unteren Karosseriestruktur eines elektrischen oder hybriden Fahrzeugs (1) nach einem der Ansprüche 1 bis 8; die Verstärkungsvorrichtung (11) **dadurch gekennzeichnet, dass** sie mindestens einen Körper (13) zur Befestigung an einer inneren Trägerplatte (9) vor dem Unterboden und mindestens zwei Verstärkungslaschen (15, 17) umfasst, die sich von dem Körper (13) in verschiedenen Richtungen erstrecken; eine erste Verstärkungslasche zur Befestigung an einem hinteren Ende der Wiege des Fahrzeugs und eine zweite Lasche zur Befestigung an einem unteren Träger des Fahrzeugs; Vorzugsweise umfasst die Verstärkungseinrichtung mindestens eine dritte Verstärkungslasche, die sich in einer Richtung senkrecht zu der zweiten Verstärkungslasche erstreckt.

10. Verstärkungsvorrichtung (11) nach Anspruch 9, **dadurch gekennzeichnet, dass** die Verstärkungsvorrichtung dazu bestimmt ist, an dem Fahrzeug durch Verschrauben oder Nieten befestigt zu werden, und zu diesem Zweck eine Vielzahl von Löchern für den Durchgang von Befestigungsmitteln umfasst; Vorzugsweise umfasst die mindestens eine zweite Verstärkungslasche (17) zwei Seitenkanten, die sich in Fahrzeuglängsrichtung erstrecken, und eine der Seitenkanten weist mindestens eine Bohrung für den Durchgang eines Befestigungsmittels auf.

## Claims

1. Hybrid or electric vehicle (1) with a floor, low end (3) lengths extending along the two side edges of the floor, at least one subfloor propulsion battery tray (5), a cradle (7) of engine support including two rear ends, and inner (9) underfloor stretchers with an outboard end Batch (5) of propulsion battery means that the vehicle (1) is **characterized in that** it also includes at least one reinforcement device (11); the reinforcement device comprising at least one body (13) attached to an inner stretcher (9) front underfloor and at least two reinforcement legs (15, 17) extending from that body (13); and in so far as a first (15) reinforcement leg connects the body (13) to a rear end of the cradle (7) and a second (17) reinforcement leg connects the body (13) to a long (3) base.

2. Vehicle (1) according to Claim 1, characterized that the reinforcement device (11) also includes a third leg (19) of reinforcement extending from that body (13) according to the transverse direction of the vehicle and attached to or placed in support of at least one battery (5) of propulsion.

3. Vehicle (1) according to Claim 2, **characterized in that** it includes a single reinforcement device (11), the said reinforcement device (11) consisting of two bodies (13), each body (13) being attached to an inner stretcher and a single third reinforcement leg (19) connecting the two bodies (13).

4. Vehicle according to Claim 2, characterized as it includes two reinforcement devices (11); preferably, the two reinforcement devices (11) are connected by their third reinforcement leg (19).

5. Vehicle (1) According to one of the claims 1 to 4, a vehicle that also includes two underfloor outer stretchers (25), each outer stretcher (25) extending at least in part between one or more of the battery tanks (5) and one of the underside lengths (3) depending on the longitudinal direction of the vehicle, the vehicle being characterized as at least one second reinforcement leg (17) consists of two lateral edges extending according to the longitudinal direction of the vehicle and covering one of the outer stretchers (25); preferably, at least one second reinforcement leg (17) is fixed to the spar by one of its lateral edges or by a fastening interface extending from one of its lateral edges.

6. Vehicle (1) according to Claim 5, each second reinforcement leg consisting of a front end and a rear end, with the front end attached to the body (13) of the reinforcement device (11); the vehicle (1) is **characterized in that** the rear end of the vehicle or at least one second reinforcement leg is attached to the outer stretcher (25).

7. Vehicle (1) according to one of the claims 1 to 6, **characterized by** the fact that the reinforcement device (11) consists of one piece.

8. Vehicle according to one of claims 1 to 7, characterized that at least one leg of the reinforcement device is a profile showing an L or U section; and/or is formed by at least one sheet with a thickness between 2,0 mm and 2,5 mm; preferably, the sheet(s) are made of steel.

9. Reinforcement device (11) intended to strengthen the undercarriage structure of an electric or hybrid vehicle (1) according to one of the claims 1 to 8; the reinforcement device (11) being **characterized in that** it includes at least one body (13) intended to be attached to a front underfloor inner stretcher (9) and at least two reinforcement legs (15, 17) extending from that body (13) in different directions; a first reinforcement leg intended to be attached to a rear end of the cradle of the vehicle and a second leg intended to be attached to a bottom-of-the-box length of the vehicle; preferably, the reinforcement device includes at least one third reinforcement leg extending in a direction perpendicular to that of the second reinforcement leg.

10. Reinforcement device (11) according to Claim 9, **characterized by** the fact that the reinforcement device is intended to be attached to the vehicle by screw or riveting and includes a plurality of holes for the passage of means of fixation; preferably, the or at least one second reinforcement leg (17) consists of two lateral edges intended to extend according to the longitudinal direction of the vehicle and one of the said lateral edges shows at least one hole for the passage of a means of attachment.
